# EUROPEAN PATENT APPLICATION

(11) **EP 1 349 352 A1**
(43) Date of publication of application: **01.10.2003**
(21) Application number: 02008330.9
(22) Date of filing: 11.04.2002
(51) Int. Cl.: H04M 1/2745

(54) **Operation control for contacting a communication party from a mobile phone**

(30) Priority: 28.03.2002 EP 02007189
(71) Applicant: Sony International (Europe) GmbH, 10785 Berlin (DE)
(72) Inventor: Seufert, Uwe, 85609 Aschheim-Dornach (DE)
(74) Representative: Körber, Martin, Dipl.-Phys.

(57) **Abstract**

A method, a contacting control system, a communication terminal, and a software product are presented to facilitate a contacting of a communication party by a user of a communication terminal based on contacting information specifying one or more different possibilities for contacting the communication party, whereby a connection with the communication party is set-up based on a possibility selected by the user from the contacting information, and it is verified, if the connection set-up is successfully with the contacting information being displayed on the communication terminal in the event of a failure of the connection set-up.

## Description

The present invention relates to a communication terminal, particularly to a communication terminal with an operation control for setting up a connection with a communication party.

Many communication terminals for mobile wireless telecommunication network systems provide a feature usually referred to as a phonebook which contains information on how to contact persons or services from the respective communication terminal. The information is usually presented in form of lists, which relate information identifying a specific communication party to information specifying one or various possibilities for contacting that specific communication party. A communication party in the context of this specification means any counterpart of a communication from a communication terminal like for instance an acquainted person, a business partner, a telephone service like a speaking clock, a network service e.g. accessible via an Internet domain or a telephone number or anything like that. Some phonebooks are organised in a single-level list where only one contacting possibility is registered with one identifying information (e.g. name and telephone number), others provide a multilevel list with a higher-level list presenting information identifying the stored contact persons and services, and sub-lists presenting contact information specific for a contact person or service selected from the higher-level list.

Nowadays, there are generally many alternative ways of contacting somebody or something like a phone or network service from a communication terminal. A private person or a business partner may e.g. be contacted via different home or business phone numbers, or also on a mobile phone, but many can also be contacted with a facsimile, a SMS or an E-mail. Also phone and network services, like e.g. stock or flight information are usually accessible via different numbers or domains, respectively. Furthermore, most of the services also offered by different providers.

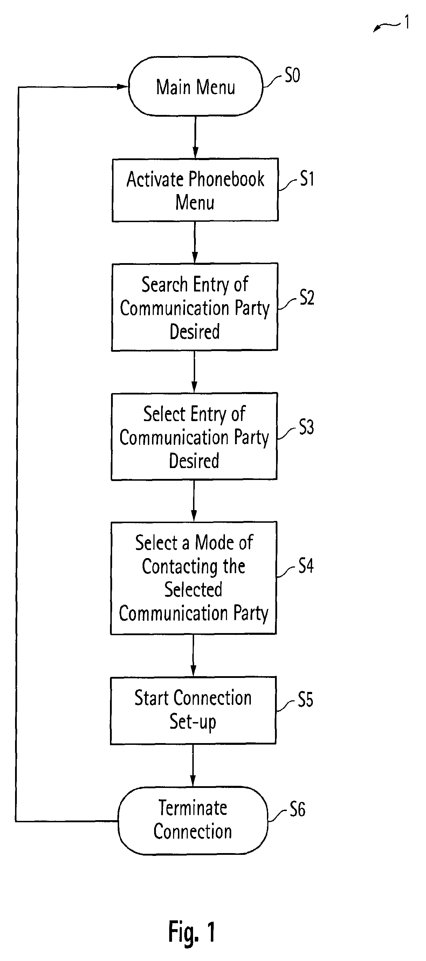

When trying to contact a person or a service, a user of a communication terminal typically has to activate the phonebook menu in a first step S1 as shown in Fig. 1. Then he or she has to browse through the higher-level or single-level list in a second step S2 to find the entry of the desired communication party, and select it in a third step S3 when found. For a phonebook with a single-level list, a user now proceeds with step S5. When a phonebook with a multilevel list is used, he or she has to choose from the respective sub-list now presented in the following step S4 an entry which appears to him or her as the most likely connection specification to contact the respective communication party. A connection specification, which is also referred to as a possibility for contacting a communication party in this description, is composed of a specification of the type of the respective connection like for instance a call line, an E-mail or domain address or the like, and the number or address itself used to establish the respective connection. In step S5 it is tried to set-up the connection. If the contact is not available on the chosen line, the user terminates the connection set-up in step S6 and is then referred back to step S0 presenting the main menu to him or her again.

If the connection could not be set-up because the line was busy, most of the communication terminals provide a redial key for resuming the previous connection set-up. If the connection could not be set-up because the call was not answered or the address was unavailable at that time, and a user wants to try a different possibility for contacting the same communication party, he or she is referred back to the main menu and has to repeat the whole procedure illustrated in Fig. 1 again, regardless of what the reason for terminating the call has been.

It is therefore an object of the present invention to provide a menu control which reduces the effort necessary for contacting a communication party on a further try.

This object is achieved according to a method to facilitate a contacting of a communication party, a contacting control system, a communication terminal, and a software product as claimed in the respective independent claims.

This object is particularly achieved by a method to facilitate a contacting of a communication party by a user of a wireless communication terminal based on contacting information specifying one or more different possibilities for contacting that communication party, comprising the steps of setting up a connection with the communication party based on a possibility selected by the user from the contacting information, verifying if the connection is set-up successfully, and in the event of a failure of the connection set-up, displaying the contacting information on the communication terminal in order to enable a user to set-up a new connection with the same communication party via the one or more communication possibilities.

The above object is further achieved by a contacting control system for use on a communication terminal comprising an access means for accessing a database with contacting information specifying one or more possibilities for contacting a communication party, a display means adapted for displaying the contacting information or a part thereof, a menu control means for controlling the information displayed on the display means, a selecting means for selecting an information subset of the displayed contacting information or the displayed part thereof, and a connection control means for setting up a connection based on the content of an appropriate information subset selected with the selecting means, and for verifying if the respective connection is set-up successfully, whereby in the event of a failure of a connection set-up verified by the connection control, the menu control means presents the information from which the information subset for the connection set-up was selected.

Further, the above object is achieved by a communication terminal with a contacting control system according to the present invention and by a software product for use on a communication terminal comprising instructions for performing a method according to the present invention when stored in a storage means and executed by a processing means of a communication terminal.

On controlling the success of a connection set-up and returning to the display of the contacting information for the previously selected communication party in the event of a failed connection set-up, the present invention advantageously reduces the number of operating steps to be taken by a user when trying to contact the respective communication party using a different possibility.

Additional advantageous features of the present invention are claimed in the respective sub-claims.

A verification of the connection being set-up successfully is advantageously based on the respective connection providing a communication channel, which allows to distinguish between a call just transferred to another extension or address, and a call answered by the desired communication party.

A verification of a connection being set-up successfully is further advantageously based on a time period for which the respective connection provides a communication channel, so that calls which end up at an answering machine or a mailbox can easily be identified as not successful connection set-ups.

Particularly when using a communication terminal for a transmission of data, a verification of the connection being set-up successfully is advantageously based on a successful execution of a process using the respective connection which can easily be achieved by using an acknowledgement or error message of the respective process.

In a preferred embodiment of the present invention, at least one link to a notification template is displayed along with the contacting information on the communication terminal in the event of a failure of a connection set-up. A user is thus enabled to send a notification to a communication party with a minimum of effort.

In the following, the present invention will be explained in detail, and by way of example only with reference to the attached drawings, in which
- Fig. 1: is a flow chart showing the procedure to be followed when trying to contact a communication party from a conventional communication terminal,
- Fig. 2: is a flow chart of the procedure to be followed according to the present invention when more than one try is necessary to contact a communication party desired,
- Fig. 3: shows an example of contacting information available with a communication terminal according to the present invention,
- Fig. 4: is a flow chart showing the details of a contacting process according to the present invention, and
- Fig. 5: shows a communication terminal with a contacting control system according to the present invention.

In the drawings, like elements are assigned the same reference numerals.

The steps to be taken on conventional communication terminals like e.g. a mobile phone, a personal digital assistant or the like are illustrated in Fig. 1. As already described above, six steps are necessary to be taken by a user when trying to call somebody starting from the main menu of the appliance used. The terms "call" and "calling" are used in this specification in their conventional meaning of calling the mobile terminal or a fixed line phone of somebody else, but also for describing a communication which is substantially based on a data transmission. Accordingly, a communication party can be a human being but also a storage means or a service accessible with the communication terminal used. The term "contacting" as it is used in the context of this specification refers to a successfully set-up connection with a respective communication party.

Assumed, the connection set-up started in step S5 of the procedure 1 shown in Fig. 1 has not been successful at the first try, because the call has not been answered by the communication party or the line was busy, a user will terminate the connection and is then referred back to the main menu of the communication terminal. If the user wants to contact the desired communication party again using a different possibility, i.e. a different call number or a certain data transmission service like e.g. an SMS, an E-mail or a fax, then all steps shown in Fig. 1 have to be cycled through again.

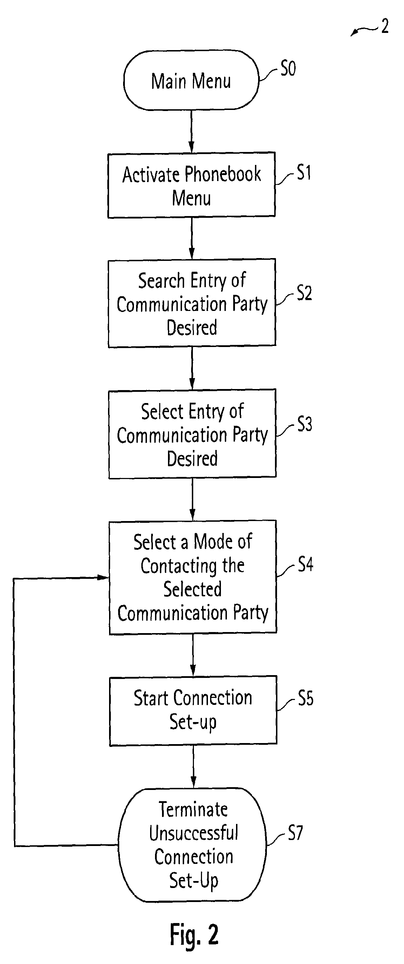

The principle process 2 to be cycled through according to the present invention is illustrated in Fig. 2. For a first try to contact a communication party, a user has to proceed from step S0 to S5 shown in Fig. 2 like in the conventional process shown in Fig. 1 (step S4 will be omitted in case of a phonebook organised in a single-level list). If the communication party was not available, the user terminates the connection in step S7 and is hereby not being referred back to step S0 as in the prior art but instead, in case of a phonebook organised in a multilevel list to step S4 or, in case of a phonebook organised in a single-level list to step S3. This means, that not the main menu is presented to the user but the contacting information for the previously selected communication party for him or her to choose another possibility for contacting the desired communication party another time. A user thus spared to activate the phonebook menu again, browse through it to find the same entry for the same communication party again, and select this entry for a further time, which can be very time consuming particularly for phonebooks with a great many of entries.

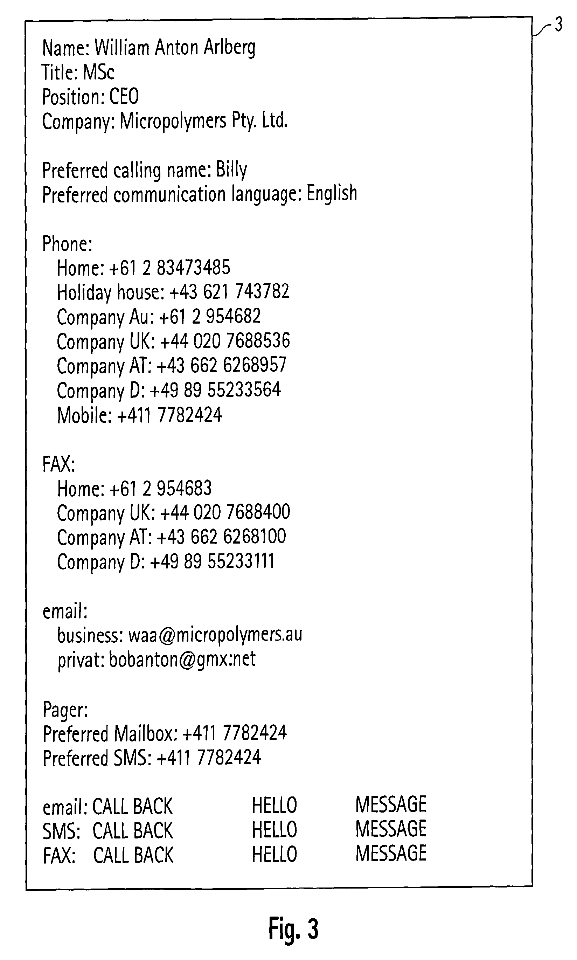

Fig. 3 gives an example of a phonebook entry 3 for a certain communication party. The contacting information is stored in a database accessible with the communication terminal. The database is either identical or a part of the phonebook available at the respective communication terminal. It is either stored in a memory means of the communication terminal itself or in an exchangeable memory device or it may be stored in a memory means of a telecommunication provider to be called up when needed. The contacting information is organised with the communication parties forming the search criterion. For each communication party stored, at least one entry is present in the database. Each entry provides contacting information with information specifying the identity and optional also attributes of a respective communication party.

The identifying information given in the example of Fig. 3 is the name of the communication party shown to be "William Anton Arlberg". As attributes for a communication party, the academic title, the position and a company name are listed. Further attributes specify the preferred calling name of the communication party, and the preferred communication language to be used with it. The information specifying the possibilities for contacting the respective communication party lists the types of possible communication channels with the respective numbers or addresses related to them.

Usually, many alternative possibilities for contacting a respective communication party are listed in a phonebook entry 3. In the example of Fig. 3, Mr. William Anton Arlberg can be reached by phone, fax, E-mail, and he can be contacted by sending a message to his pager, his mailbox, or per SMS. Private numbers, like e.g. the home number, the number of a holiday house or the mobile phone a complemented by several business numbers as that of the main office in Australia and the subsidiaries in the United Kingdom, Austria and Germany. To contact Mr. Arlberg, his fax machine at home and also fax machines in the subsidiaries can be used. Mr. Arlberg further owns a business and a private E-mail account.

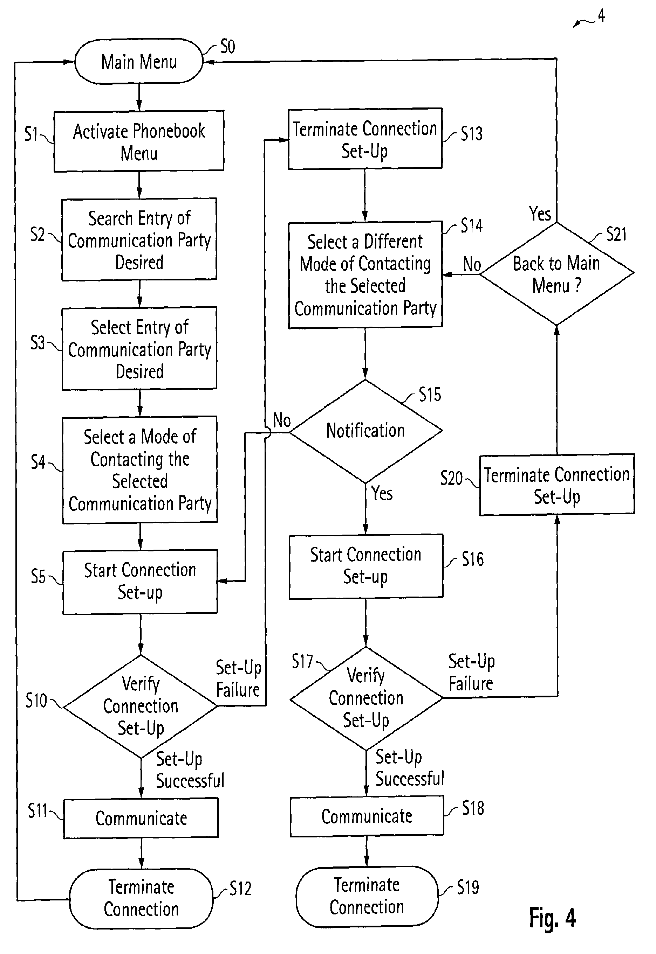

When trying to contact a certain communication party, very often many of the different possibilities have to be tried, before the respective communication party can finally be reached. The method schematically illustrated in Fig. 2 therefore saves a lot of time as compared to the conventional method shown in Fig. 1. The details of a method to facilitate a contacting of a communication party according to the present invention are shown in Fig. 4.

At the beginning, a user starts from the main menu S0 first selecting the desired communication party from the notebook according to steps S1 to S3, and chooses then in step S4 a possibility for contacting the selected communication party. The respective connection set-up is started in step S5. Assumed the connection was set-up successfully, which is verified in step S10 of the procedure, the communication can take place in step S11 and will, when terminated in step S12 being followed by a presentation of the main menu to the user. If a set-up failure or no answer is verified in step S10, the connection set-up will be terminated in step S13 if not already happened, and the previous phonebook entry will be presented to the user for re-selecting a possibility of contacting the desired communication party in step S14. If the reason for the connection set-up failure has been a busy line, the user may also redial the same line at a later time. But if the connection set-up has been terminated for other reasons, the user can now select a different possibility to contact the previously selected communication party. At this point, a user may also decide that he or she is not willing to contact the communication party in a previous way but just send a notification, the details of which will be described later in this specification. Sending a notification means, that an information is sent to the communication party with usually not followed by further tries of contacting it.

For phonebooks organised in a single-level list, the process is slightly different from that shown in Fig. 4. Steps S4 and S14 are not available for a respective embodiment of the invention. Instead of being referred to the last used sub-list, a user is instead referred back to the last entry chosen from the single-level list. As alternative possibilities of contacting the same communication party are usually stored under very similar identities, the respective entries are most of the time found in close vicinity of the last used entry, so that a user still saves a lot of time.

When the contacting possibility is identified to be a notification in step S15, a suitable connection set-up will be started in step S16, verified in step S17, and, if successfully set-up, the notification will be sent to its destiny in step S18. As soon as the transmission of the notification is completed, the connection will be terminated in step S19. If the connection however is not set-up successfully to enable a transmission of the notification, the connection set-up will be terminated in step S20, and the user will be presented an option in step S21 to either return to the main menu or return to the phonebook entry of the previously selected communication party from where he or she can start a further try to notify the respective communication party. If the next try does not use a notification, the process passes on to step S5, where a new connection is being set-up for the now selected possibility of contacting the communication party. Although not shown in the flow chart of Fig. 4, a user is further given the option to leave the phonebook at any time he or she likes. This can be done by selecting a respective item in the phonebook entry menu or by pressing a certain key of the key pad of the communication terminal.

The verification of the connection set-up can be based on several criteria, which may be used alternatively or in a combination. The first criterion for a connection set-up failure is a call staying unanswered. A second criterion for deciding if a connection set-up failed is a termination of an answered call within a certain time period. This criterion is particularly useful, when a call is answered by an answering machine, a mailbox or an automatic messaging system. Usually, a user will hang up when he or she is not interested in leaving a message on a mailbox or an answering machine or when he or she realises from the information given, that the desired person is not available as it is e.g. already past office hours. Those decisions are usually made in a very short time, so that the time period may suitably be set to a value of approximately 5 or up to 10 seconds.

Sometimes, a caller is passed from extension to extension of a company before it is finally noticed, that the desired communication party is not available. Although the call will then exceed the time period mentioned above, it is clear from the changing numbers of the extension lines received from the calling line identification, that the set-up of the connection line did not provide the communication channel desired. The second criterion can be combined with this in that the above mentioned time period is used to decide if the last connection to a respective extension is to be judged as a successful or failed connection set-up.

For data calls there is a different situation than for speech calls, as the connection set-up cannot be judged as being successful based on the duration of the connection. Instead, the connection only provides a suitable communication channel, when all data necessary are transmitted completely. An acknowledgement and/or an error message is therefore used for data calls to verify a respective connection set-up.

If after a failed try of contacting a communication party a user comes to the conclusion that there will be no chance to reach the respective communication party directly, he or she might prefer to send a note instead. Notifications are usually send with communication possibilities based on data transmission, like e.g. a fax connection, an E-mail, a pager or an SMS. Many communication terminals, particularly mobile phones provide only a limited number of keys for typing in text, which usually makes the writing of a note very teasing. As many of the notifications follow a certain scheme like for instance informing somebody about the user having tried to call him or her, a birthday greeting, a request for being called back or a reminder for an appointment or the like, a special embodiment of the present invention provides templates for these notifications. The template contains some ready-made text which can be completed either manually or automatically.

A request for being called back might contain the ready-made text "Hello , I was trying to reach you at . Please call me back.". A user now only has to fill in the blanks which saves him or her a lot of time compared to writing the full text. Preferably, the blanks are filled in automatically using variable parameters which refer to certain system parameters and/or information registered on the communication terminal. To give an example, the call back request cited above will thus look like: "Hello <name>, I was trying to reach you at <date> & <time> <time zone>, please call me back. <optional text> Regards, <own name>, <mobile number>". The text given in angle brackets denotes certain variable parameters. The actual values of the variable parameters are obtained from the communication terminal itself. <name> hereby is a wildcard for the name of the user stored in the phonebook accessible with the communication terminal. <name> can also be a wildcard for the preferred calling name given in the respective selected phonebook entry. <date>, <time> and <time zone> are obtained from the system of the communication terminal and <optional text> opens an editor for the user to enter additional text at the end of the message. <own name> and <mobile number> are wildcards for the name of the user and the call number, respectively, of the communication-terminal. Both, the user's name and the call number are stored on and retrieved from a storage means of the respective communication means.

A reminder for a meeting might e.g. look like: "Hi <name>, don't forget our meeting at <optional text>. See you, <own name>". Again, the variable parameters <name> and <own name> are replaced by the entry for the name or preferred calling name present in the selected phonebook entry and the name of the user of the communication terminal, respectively, while the variable parameter <optional text> will ask the user to add the missing information which will automatically be placed in the message at the position of that parameter.

Most of the templates are independent of the respective notebook entry selected, and the links thereto are therefore shown along with each presentation of a notebook entry. Alternatively hereto, as those templates are only used to back up a failed try of getting hold of a communication party, the links to the templates may only be presented when a connection set-up has been verified to be a failure.

One example of presenting the links to the templates together with the information of a notebook entry 3 is shown in Fig. 3. At the bottom links to three different notification templates are shown. The first one denoted "CALL BACK" is a request for being called back, the second denoted "HELLO" refers to a say hello message, and the third "MESSAGE" is a general message, which can either be send by E-mail, SMS or fax. In this example, each message link is bound to a certain communication set-up possibility defined.

In a further embodiment of the present invention, the notification templates are presented independent of the possibility for contacting a communication party with only the title of the notification link presented. The preferred possibility or system for sending will then be chosen subsequent to the template for the notification.

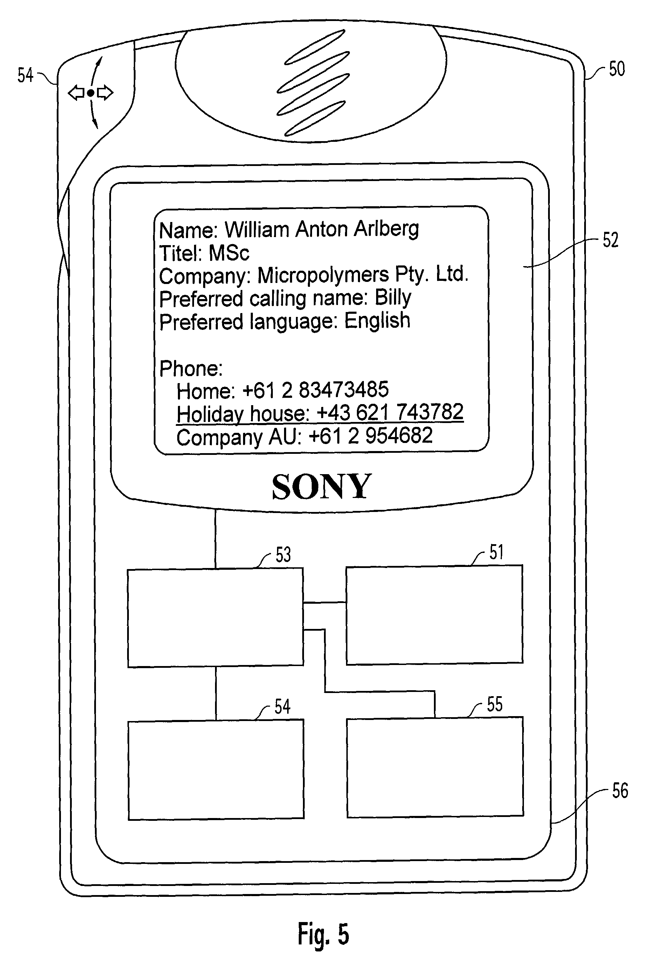

Fig. 5 shows a communication terminal 50 with a contacting control system 56 according to the present invention. The contacting control system 56 uses an access means 51 for accessing a database containing the contacting information available for the user on the communication terminal 50. A section or entry chosen from a database can be displayed on the display means 52. If the information to be displayed exceeds the capacity of the display area, scrolling means allow to browse through the information provided for display. The content to be displayed is controlled by the menu control means 53 which further controls the sequence of operations according to the steps shown in Fig. 4. The menu control 53 further controls the access means 51 for obtaining the data required from the contacting information database. A selecting means 54 which-is controlled by the menu control means 53 enables a user to select an item from the information displayed. The selected item is then interpreted and transformed into a respective action by the menu control means 53. Usually, the keypad of the communication terminal is used for selecting items from the information displayed on the display means 52, but also special selecting means like e.g. a jog dial can be used additionally or instead. The monitoring of the connection set-ups is performed by a connection control means 55, which for one sets up a connection based on the content of an appropriate information selected by a user, and which further verifies if the respectively set-up connection was successful or failed.

The means forming the contacting control system 56 shown in Fig. 5, may either be implemented by hard-wired electronic circuits or in form of software, which is stored in a storing means of the communication terminal, and which will implement the respective contacting control system 56 when executed by a processing means of the communication terminal 50.

## Claims

1. A method to facilitate a contacting of a communication party by a user of a wireless communication terminal based on contacting information specifying one or more different possibilities for contacting said communication party, comprising the steps of:
a) setting-up a connection with said communication party based on a possibility selected by said user from said contacting information,
b) verifying if said connection is set-up successfully, and
c) in the event of a failure of said connection set-up, displaying said contacting information on said communication terminal in order to enable a user to set-up a new connection with the same communication party via said one or more communication possibilities.

2. A method according to claim 1,
**characterised in**
**that** a verification of said connection being set-up successfully is based on the respective connection providing a communication channel.

3. A method according to claim 1,
**characterised in**
**that** a verification of said connection being set-up successfully is based on a time period for which the respective connection provides a communication channel.

4. A method according to claim 1,
**characterised in**
**that** a verification of said connection being set-up successfully is based on a successful execution of a process using the respective connection.

5. A method according to one of the claims 1 to 4,
**characterised in**
**that** in the event of a failure of said connection set-up, at least one link to a notification template is displayed along with the contacting information on said communication terminal.

6. A contacting control system for use on a communication terminal comprising:
an access means (51) for accessing a database with contacting information specifying one or more possibilities for contacting a communication party,
a display means (52) adapted for displaying said contacting information or a part thereof,
a menu control means (53) for controlling the information displayed on said display means,
a selecting means (54) for selecting an information subset of the displayed contacting information or the displayed part thereof, and
a connection control means (55) for setting up a connection based on the content of an appropriate information subset selected with said selecting means, and for verifying if the respective connection is set-up successfully,
**characterised in**
**that** in the event of a failure of a connection set-up verified by said connection control, said menu control means presents the information from which the information subset for the connection set-up was selected.

7. A contacting control system according to claim 6,
**characterised in**
**that** said connection control verifies if a connection is set-up successfully according to one of the methods of claim 2 to 4.

8. A contacting control system according to claim 6 or 7,
**characterised in**
**that** in the event of a failure of a connection set-up, said menu control means displays at least one information enabling an access to a notification template.

9. A communication terminal with a contacting control system according to one of the claims 6, 7 or 8 and adapted to perform a method according to one of the claims 1 to 5.

10. A software product for use on a communication terminal comprising instructions for performing a method according to one of the claims 1 to 5 when stored in a storage means and executed by a processing means of said communication terminal.
